(19) Europäisches Patentamt
European Patent Office
Office européen des brevets

(11) EP 0 459 833 B1

## (12) EUROPEAN PATENT SPECIFICATION

(45) Date of publication and mention
of the grant of the patent:
**11.09.1996  Bulletin 1996/37**

(51) Int Cl.6: **G21K 7/00**

(21) Application number: **91304970.6**

(22) Date of filing: **31.05.1991**

(54) **X-ray microscope**

Röntgenstrahlenmikroskop

Microscope à rayons X

(84) Designated Contracting States:
**DE FR GB NL**

(30) Priority: **01.06.1990  JP  143870/90**

(43) Date of publication of application:
**04.12.1991   Bulletin 1991/49**

(73) Proprietor: **CANON KABUSHIKI KAISHA
Tokyo (JP)**

(72) Inventors:
• **Hayashida, Masami,
c/o Canon Kabushiki Kaisha
Ohta-ku, Tokyo (JP)**
• **Watanabe, Yutaka, c/o Canon Kabushiki Kaisha
Ohta-ku, Tokyo (JP)**
• **Niibe, Masahito, c/o Canon Kabushiki Kaisha
Ohta-ku, Tokyo (JP)**
• **Iizuka, Takashi, c/o Canon Kabushiki Kaisha
Ohta-ku, Tokyo (JP)**
• **Fukuda, Yasuaki, c/o Canon Kabushiki Kaisha
Ohta-ku, Tokyo (JP)**

(74) Representative:
**Beresford, Keith Denis Lewis et al
BERESFORD & Co.
2-5 Warwick Court
High Holborn
London WC1R 5DJ (GB)**

(56) References cited:
**WO-A-87/00644          JP-A- 3 071 100**

• **OPTICS LETTERS, vol. 14, no. 1, June 1989,
pages 539-541, New York, US; J.A. TRAIL:
"Compact scanning soft-X-ray microscope
using a laser produced plasma source"**
• **NUCLEAR INSTRUMENTS & METHODS IN
PHYSICS RESEARCH, SECTION A, vol. 266, no.
1, April 1988, pages 303-307, Amsterdam, NL; F.
CERRINA et al.: "A scanning photoelectron
microscope at aladdin"**
• **NUCLEAR INSTRUMENTS AND METHODS,
SECTION A, vol. 246, nos. 1-3, May 1986, pages
675-680, Amsterdam, NL; B. NIEMANN et al.:
"X-Ray microscopy with synchrotron radiation
at the electron storage ring bessy in Berlin"**
• **PATENT ABSTRACTS OF JAPAN, vol. 13, no.
361 (P-917)[3709], 11th August 1989 & JP-A-1
119 800**

## Description

The present invention relates to an X-ray microscope system. Amongst X-ray microscopes, the contact type, the scan type and the imaging type are known. Amongst these types, the imaging type microscope has the highest spatial resolution, and therefore many studies have been made concerning development of X-ray optical elements.

Generally an imaging type X-ray microscope comprises an X-ray source, an illumination optical system (illumination system), a sample (subject of observation), an imaging optical system (imaging system) and a detector. The spatial resolution of an X-ray microscope differs depending on the optical element used as the imaging optical system. Examples of optical elements which can be used as imaging optical demands include a Fresnel zone plate, a grazing incidence reflector and a multi-layered film reflector. The theoretical resolution of an imaging optical system that uses a Fresnel zone plate is of the order of the width of the outermost ring zone. In practice with this type of imaging optical system, a resolution of about 50 nm is attainable.

With an imaging system using a grazing incidence reflector, the theoretical resolution is about a few times the wavelength. However, in this type of imaging system the roughness or configuration error of the surface of the reflecting mirror affects the resolution. Therefore, in order to obtain the theoretical resolution, high precision is required in respect of the surface roughness and the configuration. By way of example, a precision of the order of one nanometre is necessary.

Generally it is very difficult to produce a mirror surface with this degree of machining precision. As a result, the resolution of a Wolter type mirror optical system using a grazing incidence reflector is present as low as about 1 micron.

An imaging optical system using a multilayer film reflector requires the same high surface precision and configuration precision as for an imaging optical system using a grazing incidence reflector. Additionally, as regards film thickness, an extraordinarily high precision of the order of 1/10 nm is required. Consequently, as with the case of an optical system using a grazing incidence reflector it is very difficult to obtain high resolution. For these reasons, currently many X-ray microscope studies are being made in respect of systems of the type where the imaging optical system comprises a Fresnel zone plate.

Generally a Fresnel zone plate has a low diffraction efficiency, and in many cases an X-ray microscope is required to be equipped with a bright X-ray source or a bright illumination system. Frequently the X-ray source is synchrotron radiation. In some cases where a brighter X-ray source is required, an insertion type X-ray source such as an undulator or the like is used. Since, however, it is difficult to increase the luminance of an X-ray source, there is a strong requirement to improve the energy efficiency of the illumination system and thereby increase the brightness.

A conventional X-ray microscope having a Fresnel zone plate in its imaging system uses a concave diffraction grating or a Fresnel zone plate in its illumination system. These elements have an X-ray collecting function and can provide bright illumination as well as a spectroscopic function in which they can select a beam of a particular wavelength or wavelengths. Also, in some cases, a flat diffraction grating and a concave mirror are used in combination, with the spectroscopic function and the X-ray collecting function being provided separately.

Generally a Fresnel zone plate used in an illumination system has alternatively disposed transparent concentric ring like zones (transparent with respect to X-rays, for example) and non-transparent concentric ring like zones (non-transparent with respect to X-rays ). The total area of the non-transparent zones is about one half of the whole area. Therefore, about 50% of the X-ray are blocked. Also, about one half of the remaining 50% is not diffracted and goes straight through. Thus if such an amplitude type Fresnel zone plate is used, there is the inconvenience of a large decrease in X-ray quantity.

With respect to positive and negative first orders, even an ideally fabricated Fresnel zone plate has a relatively low diffraction efficiency, which is not greater than 10%. In an attempt to increase the diffraction efficiency, a Fresnel zone plate (phase type Fresnel zone plate) in which a non-transparent portion is formed by a thin film which provides a phase shift of $\pi$ has been proposed. The diffraction efficiency of such a phase type Fresnel zone plate with respect to the positive and negative first orders is about 10 to 30%. In order to reduce absorption of the phase type Fresnel zone plate and to reduce the phase difference, the film should be maintained relatively thin, and its thickness should be maintained constant with good precision. This method suffers from the inconvenience that it is not easy to obtain a large area. Although a Fresnel zone plate having a very thin substrate of polyimide or silicon nitride has been proposed, it still requires the film thickness to be reduced and high precision to be obtained. It therefore still suffers from the problems of obtaining a large area.

If a concave diffraction grating or a flat diffraction grating is used in combination with a concave mirror to provide an illumination system, because of low reflectivity of the diffraction grating or the mirror, it is difficult to attain sufficient brightness. Further, since the wavelength resolution is higher by one order or more than that of the Fresnel zone plate, a beam of unnecessarily narrowed bandwidth is extracted. As a result, it is not easy to obtain a bright illumination system.

In conventional X-ray microscopes as described above, the efficiency of energy use is low, and a bright image is not formed and thus is not detected.

WO 87/00644 discloses a lithographic system which incorporates the use of a soft X-ray source which is emissive like a point source, a spherically concaved reflector to converge the soft X-ray onto a Fresnel zone plate (FZP) wherein a mask pattern or an original to be copied is positioned between the reflector and the FZP so that the soft X-ray will transmit through the mask pattern to form a reduced image or copy thereof on a resist coated target substrate.

Nuclear Instruments & Methods in Physics Research; A246 (May 1986); pages 675-690 discloses an X-ray optical system having Fresnel zone plates in its illumination system.

Optics Letters Vol. 14 (1989) June, No. 11, pages 539-541 discloses a scanning soft X-ray microscope that uses a laser-produced plasma as the soft X-ray source and normal incidence multilayer-coated mirrors in a Schwarzschild configuration as the focusing optics. The disclosure of Nuclear Instruments & Methods in Physics Research A266(1988), 303-307, North-Holland, Amsterdam is similar.

An object of the present invention is to provide an X-ray microscope system having improved energy efficiency.

According to the invention there is provided an X-ray microscope system having features as recited in claim 1.

The present invention will now be described by way of example with reference to the accompanying drawings in which:-

Figure 1 is a schematic view of an X-ray microscope according to an embodiment of the present invention.

Figures 2 and 3 are graphs each showing a relationship between parameters P and W.

Figure 4 is a schematic view of an X-ray microscope according to another embodiment of the present invention.

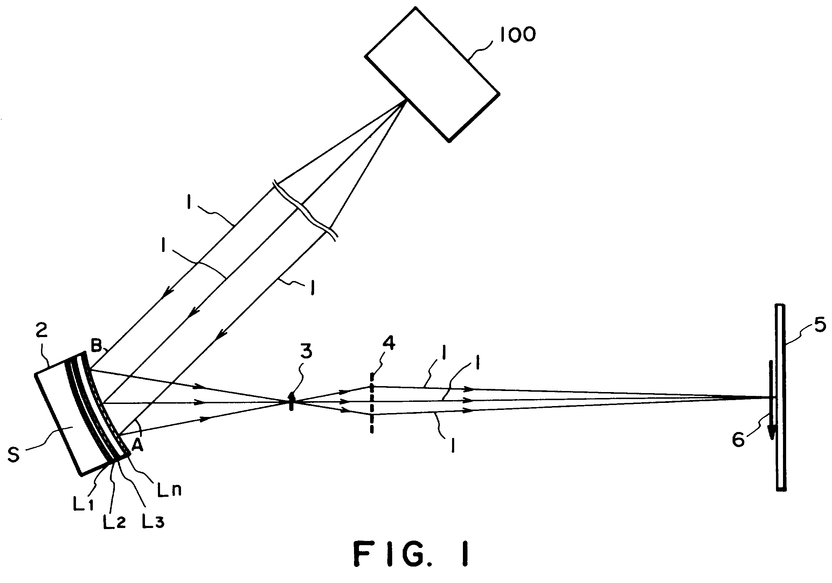

Figure 1 is a schematic view of a main portion of an optical arrangement according to an embodiment of the present invention. Denoted at 1 in Figure 1 are X-rays emitted by an X-ray source 100, and denoted at 2 is a multilayered-film concave reflection mirror having a smooth reflection surface for reflecting the X-rays 1. The reflection mirror 2 has a substrate S on which multilayered films L1, L2, L3, ... and Ln of a number (n) and of materials to be described later, are formed by deposition. Denoted at 3 is an object (sample) to be observed; at 4 is an imaging Fresnel zone plate; and at 5 is a detector. An image 6 of the object 3 is formed on the detector 5 surface. In this embodiment, no diffraction grating is provided on the path of X-rays and only one multilayered-film mirror is used.

In the present embodiment, the X-rays are reflected by the multilayered-film concave reflection mirror 2 and are collected on the object 3 surface. Simultaneously, wavelength selection is effected to meet the wavelength to be used. The X-rays transmissively scattered (diffracted) by the object 3 are incident on the Fresnel zone plate 4. In response, the zone plate 4 collects the received X-rays and forms an image 6 of the object 3 upon the detector 5 surface.

In the present embodiment, as an example, the X-ray source 100 may comprise a synchrotron orbital radiation (SOR) source which emits synchrotron radiation. The reflection mirror 2 may comprise a substrate having its surface polished into a parabolic face on which alternate layers of Cr (chromium) and C (carbon) are formed.

X-rays emanating from the synchrotron radiation source may be partially blocked by an aperture means (not shown) and, as a result, a beam of 8 mm in a horizontal direction (parallel to the sheet of the drawing) and 3mm in a perpendicular direction (perpendicular to the sheet of the drawing) may impinge on the multilayered-film concave mirror 2 surface. The mirror may preferably comprise a substrate S of silica polished into a paraboloid of revolution. As regards the configuration precision of the paraboloidal face of the mirror 2, an error of $-\lambda/3$ ($\lambda = 632.8$ nm) from an idealistic configuration will be adequate. As regards the surface roughness, a level of 2 Årms order is adequate. On such a substrate, alternate layers of Cr and C of a number of 501 (five hundred and one) are formed, with the configuration precision and the surface roughness being substantially unchanged. The mirror 2 may be so set that the revolution plane of the paraboloid of revolution lies in a perpendicular plane and that the beam center (central beam of X-rays) is incident on the mirror at an angle of about 30 deg. as measured with respect to a perpendicular direction to the mirror surface.

At the opposite end portions A and B of the X-ray beam 1 in a horizontal plane, the angle of incidence on the reflecting mirror may be 28.2 deg. and 31.7 deg., respectively. As regards the thickness structure of the multilayered film of the reflecting mirror 2, the Cr layers L1, L3, L5, ... and L501 and the C layers L2, L4, L6, ... and L500 may have the same thicknesses, respectively. Additionally, in order to avoid shift in wavelength of the reflected rays from respective portions of the reflection mirror at the focal point thereof, in a horizontal plane a film thickness distribution may be provided along the reflection surface of the mirror. For example, at the end portion A of the X-ray beam, the film thickness may be 8.4 Å (Cr layer) and 20.1 Å (C layer) while at the end portion B of the X-ray beam it may be 8.6 Å (Cr layer) and 21.0 Å (C layer). Between the end portions A and B, the film thickness may be continuously changed. The film thickness in the perpendicular direction may be constant.

In the present embodiment, there may be partial correspondence between the wavelengths of X-rays as reflected by the multilayered-film reflection mirror and the wavelengths of the X-rays as diffracted by the Fresnel zone plate. In order to avoid superposition of the zero-th order light (transmitted light) (which goes along the optical axis of the Fresnel zone plate 4) on the image 6 of the object as formed by the Fresnel zone plate 4, at an area on the reflection surface of the mirror adjacent a portion irradiated by the center of the X-ray beam, the multilayered film structure may be destroyed by means of ion beam projection, in a circular range of 100 micron diameter. With this destruction, it may be assured that the object 3 is irradiated with a beam which is inclined with respect to the Fresnel zone plate 4. Instead of destroying the multilayered film structure, such an area may be covered by a low-reflectivity material or a material with an appropriate optical constant in a sufficient thickness to attain low reflectivity. Alternatively, the multilayered film may be originally formed without such an area.

In a design example according to this embodiment of the present invention, the reflectivity of the concave reflection mirror 2 is about 30 % (wavelength = 50 Å). With this reflection mirror, an X-ray beam of a wavelength 50 Å is collected at a distance 66.7 mm (emission angle = 30 deg.), and the beam spot size is about 10 microns. If the object (sample) 3 to be observed is placed at this position, the transmitted light passing the object 3 is collected by the Fresnel zone plate 4 upon the detector 5 surface, by which an image 6 is formed thereon. As regards the Fresnel zone plate 4, the radius of the innermost ring zone is 5.00 microns and that of the outermost ring zone is 61.44 microns. The number of the ring zones is 151 (one hundred and fifty one). The focal length is 5 mm. By placing an X-ray photographic film at the imaging position as the detector means 5 and by exposing the film, it is possible to detect the image 6.

The X-ray path may be covered by a vacuum container while the object (sample) 3 may be placed in an atmosphere by using a sample holder (not shown) with its X-ray inlet and X-ray outlet being sealed by means of polyimide films. Where diatom is used as the sample 3 and it is irradiated with X-rays of 5 nm wavelength, the transmitted X-rays will form a sharp image 6. According to simulations, the projection magnification of the image 6 upon the X-ray film is 150x and the resolution is about 0.3 micron. The necessary exposure time is about 0.05 sec (beam current = 150 mA). Such exposure time is very short as about 1/230 of that where a Fresnel zone plate of a radius 4.2 mm and ring zones of a number of 8001 (eighty hundred and one) is used in the illumination system. Thus, with the present invention, a large increase in energy efficiency is attainable.

With this embodiment of the present invention as described above, since a multilayered-film reflection mirror is used in the illumination system, it is possible to easily fabricate a large area one as compared with a conventional illumination system using a Fresnel zone plate. Also, it is possible to provide a bright illumination system with a large reflectivity, wherein the wavelength resolution is not higher than required.

In the present embodiment, assuming now that the center wavelength of used X-rays is $\lambda$, the spectral half width at the center wavelength $\lambda$ is $\Delta\lambda$, the focal length and the radius of the Fresnel zone plate at the center wavelength $\lambda$ are f and rn, respectively, and the parameter P is set to be expressed by equation (1) which reads:

$$P = 0.257831 \times (f\lambda/rn^2)(\lambda/\Delta\lambda) \qquad (1)$$

then, the components are so set as to satisfy the following relation:

$$10^{-2} \leq P \leq 10 \qquad (1')$$

Since $\lambda/\Delta\lambda$ in equation (1) is the wavelength resolution of the X-rays as spectrum-resolved by the multilayered film, the parameter P represents the wavelength resolution of the illumination system.

On the other hand, it is now assumed that, where a Fresnel zone plate 4 is used as an imaging element, the spatial resolution of the imaging element is $\delta_\infty$ if an illumination beam comprises a monochromatic beam while it is $\delta_\lambda/\Delta\lambda$ if the wavelength resolution of the illumination system is $\lambda/\Delta\lambda$. Here, if a parameter W is set to be expressed by equation (2) which reads:

$$W = (\delta_\lambda/\Delta\lambda)/\delta_\infty \qquad (2)$$

then the parameter W can be used as a parameter that represents degradation of the imaging performance of the imaging element due to chromatic aberration.

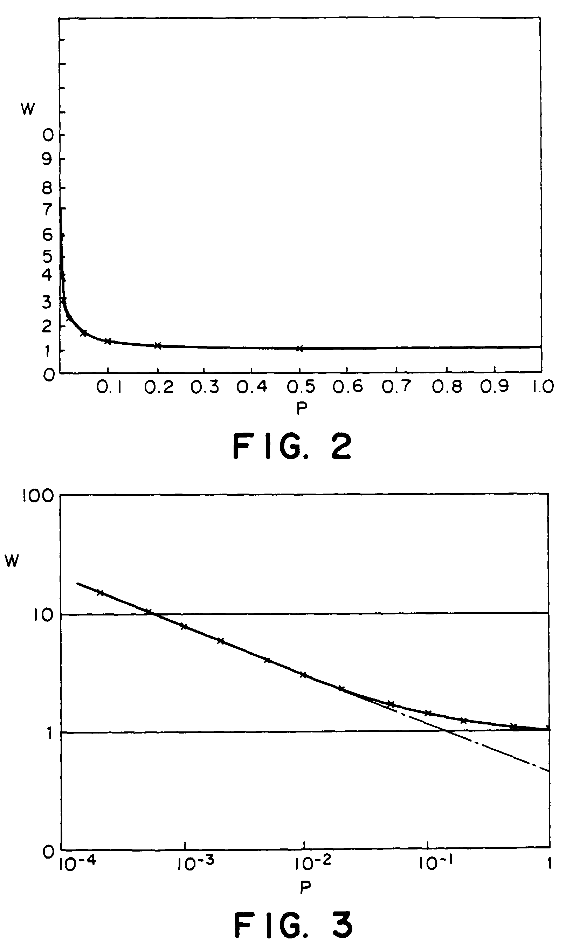

Figures 2 and 3 each depicts the relation between the parameters P and W. It is clear from Figure 2 that, as the parameter P decreases, the parameter W increases suddenly. Namely, as the wavelength resolution P of the illumination system degrades (decreases), the imaging performance degrades quickly.

Figure 3 depicts in a log-log graph the relation between the parameters P and W. It is seen in this graph that, as the parameter P decreases, the relation of the parameters P and W becomes more rectilinear. Namely, in a region in which the parameter P is small (P $\leq 10^{-2}$), the following is provided:

$$W \propto P^{-\alpha} \qquad (3)$$

From Figure 3, $\alpha$ is determined to be about 0.4. In the region in which the parameter P is small, the parameter W diverges exponentially with a negative exponent of the parameter P. The limit of starting divergence of the parameter W with an exponent of the parameter P, is P $= 10^{-2}$. If P $\geq 10^{-2}$, the degradation of the imaging performance of the imaging element may be admitted.

On the other hand, as the parameter P increases, the parameter W becomes close to "1" and the imaging performance improves. If P = 1, the imaging performance becomes substantially equal to that where monochromatic light is used. If the parameter P increases further, the imaging performance does not improve any more. To the contrary, the illumination light becomes dark and, at the wavelength resolution whereat P $\geq 10$ is provided, the beam intensity reduces to a fraction or 1/10. Thus, the advantage of using the multilayered-film reflection mirror is lessened.

For the foregoing reasons, in the present embodiment, it is desirable to use in an illumination optical system such a multilayered-film reflection mirror with wave-

length resolution $\lambda/\Delta\lambda$ by which the parameter P is maintained in a range of $10^{-2}$ to 10, preferably in a range of $3\times10^{-2}$ to 1.

In the present embodiment, the wavelength resolution of the illumination beam obtainable from the multilayered-film concave reflection mirror may be so set as to provide a parameter P of 0.222. This may ensure a bright illumination system with which a sufficiently bright illumination beam may be obtained and the exposure time may be reduced largely and, additionally, the resolution of the Fresnel zone plate may not be decreased.

General features of the multilayered film of the reflection mirror of the present embodiment will be explained.

The multilayered film of the present embodiment may include alternate layers of two materials having different optical constants. The reflectivity of this multilayered film is determined by the wavelength used and the materials used as well as the film thickness structure. Generally, such two materials as having small absorption efficiencies with respect to a used wavelength and having a large difference in refractive index, may be selected and used. Such a material as having an absorption limit at a wavelength slightly shorter than a used wavelength may be used. However, this is not a requisite since, in an observation instrument such as an X-ray microscope, the wavelength resolution of the multilayered film affects the resolution. Thus, by selecting two materials having small absorption efficiencies and having a small difference in refractive index and by increasing the number of alternate layers, it is possible to obtain a multilayered film of high reflectivity and high wavelength resolution.

Generally, an X-ray reflector has a reflectivity of a few percent to several tens of percent. It has been reported that a plane mirror with alternate layers of Rh and Si assured a reflectivity of about 80 % (wavelength = 130 Å). Therefore, with a multilayered-film reflection mirror, it is possible to attain an energy efficiency several times or several ten times higher than the diffraction efficiency of a diffraction grating or a Fresnel zone plate.

Also, with a multilayered-film reflection mirror, it is easy to obtain a large area mirror of a size of several tens of millimeters and, therefore, it is possible to use rays from an X-ray source without a large loss. This is particularly effective where a divergence type source such as a laser plasma X-ray source or an electron beam X-ray source is used. As described hereinbefore, when a multilayered-film reflection mirror is used to provide an imaging element, high precision is required in respect to the substrate machining, the film thickness control of the multilayered film and the like. In the present embodiment, however, a multilayered-film reflection mirror is used only in an illumination system. Only required for the mirror is that it converges the X-rays. Therefore, as compared with a case where it is used as an imaging system, not such high precision is required.

Further, an additional advantage of a multilayered-film reflection mirror is that the wavelength resolution is not too high. The resolution of a Fresnel zone plate used in an imaging optical system is of an order of the width of its outermost ring zone which depends on the number of ring zones. Also, the wavelength resolution of a Fresnel zone plate is determined by the number of ring zones. Thus, the resolution and the wavelength resolution of a Fresnel zone plate are in a proportional relation. This means that a Fresnel zone plate having high resolution has high wavelength resolution and, therefore, the illumination system should have high wavelength resolution. If, however, the wavelength resolution of the illumination system is too high, the bandwidth of X-rays incident on the Fresnel zone plate becomes too narrow which renders the optical system dark. Since the resolution of the device is determined by the width of the outermost ring zone of the Fresnel zone plate, even if the bandwidth of X-ray is narrow, the resolution does not improve any more. For this reason, making the resolution of an illumination system too high is not preferable.

In a light collecting Fresnel zone plate conventionally used in an illumination optical system, if the area is made larger while retaining an appropriate focal length, the number of ring zones increases and the wavelength resolution increases. In many cases, the wavelength resolution of a light collecting Fresnel zone plate is higher by one order or more than that of an imaging Fresnel zone plate. Also, in the case of a diffraction grating, the wavelength resolution thereof is higher by one order or more than that of an imaging Fresnel zone plate.

As compared therewith, the wavelength resolution of a multilayered-film reflection mirror is of the same order of that of an imaging Fresnel zone plate. This is very effective in a case such as dynamic observation of a living sample, for example, where a bright optical system is required although the resolution may not be very high. As compared with a case where a Fresnel zone plate or a diffraction grating is used in an illumination optical system, use of a multilayered-film reflection mirror in an illumination optical system can provide an optical system which is brighter by several times than the former, even only in respect to the bandwidth selected.

Further, in respect to the area to be irradiated with X-rays or the attainable reflectivity, the multilayered-film reflection mirror is superior. Thus, it can provide a bright optical system. Therefore, the present embodiment is very effective to an observation device wherein a bright optical system is required.

A simplest form of light collecting optical system using a multilayered film may be provided by a multilayered-film reflection mirror having alternate layers of two different materials formed on a concave surface substrate. As X-rays are incident on the concave reflection mirror, they are spectrum-resolved and, at the same time, they are collected to irradiate a desired position of a sample (object).

The surface configuration of the concave surface substrate may differ, depending on the type of X-ray to be incident thereon. For X-rays of substantially parallel light such as synchrotron radiation, a paraboloid of revolution may be used. For divergent light from a point light source, an ellipsoid of revolution may be used. If the focal length is long or the energy width is wide, an approximate sphere may be used.

The thickness of the multilayered film can be determined by the X-ray wavelength to be used and the convergence conditions such as the angle of incidence. Generally, the film thickness is defined by alternate provision of two layers with constant thicknesses. However, in order to obtain a higher reflectivity, an appropriate film thickness structure may preferably be adopted. The multilayered film structure is not limited to alternate layers of two different materials. To avoid roughness of interface or to prevent diffusion, one or more intermediate layers may be used. Where a curved surface mirror is used, the angle of incidence changes with the position of incidence even if a parallel beam is inputted thereto. In consideration of this, the film thickness of a multilayered film may preferably be determined so as to provide a thickness distribution on the curved face, to thereby provide a substantially even spectral distribution of reflected light as spectrum-resolved by respective portions of the mirror surface.

Moreover, in consideration of convergence conditions of an optical system or limitations to device configuration, an optical system including plural multilayered-film mirrors may be used. By way of example, an optical system of Wolter type or Schwarzschild type may be used.

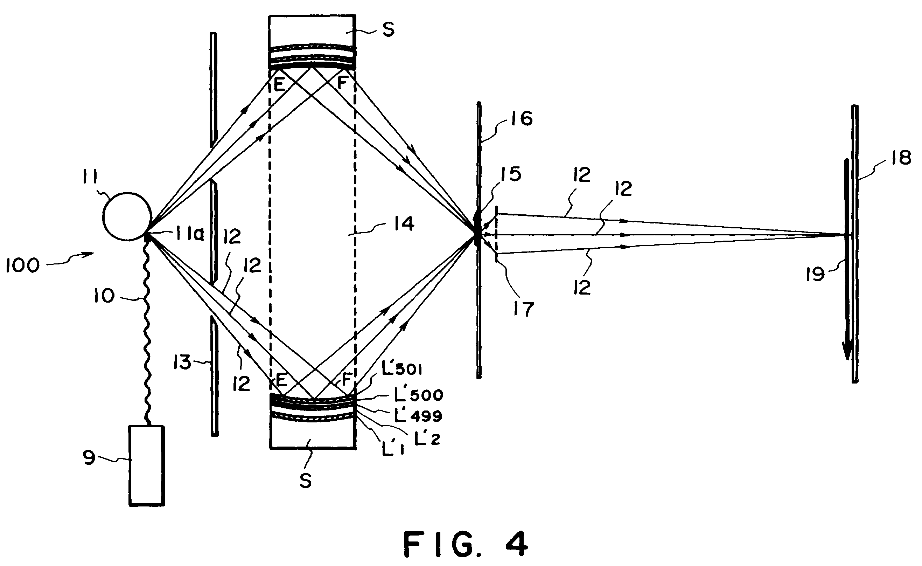

Figure 4 is a schematic view of a main portion of an optical arrangement of a second embodiment of the present invention.

In the present embodiment, an X-ray source comprises a laser plasma X-ray source, and an illumination optical system includes a multilayered-film reflection mirror having a multilayered film structure formed on an ellipsoid of revolution. An imaging optical system includes a Fresnel zone plate 17.

Denoted in the drawing at 9 is a laser; at 10 is a laser light; at 11 is a target; at 12 are X-rays; and at 13 is an X-ray dividing aperture plate. Denoted at 14 is a multilayered-film concave reflection mirror of cylindrical shape having a smooth reflection surface for reflecting the X-rays. It includes a mirror substrate S. On the inner cylindrical faces of the substrate, multilayered films L1, L2, L3, ... and L501 of a number 501 (five hundred and one) are formed. Denoted at 15 is an object (sample) to be observed. Denoted at 16 is a scattered light cutting aperture means, and denoted at 17 is an imaging Fresnel zone plate. Denoted at 18 is a detector which comprises, for example, an X-ray photographic film for recording an enlarged image 19 of the sample 15. Also in this embodiment, no diffraction grating is provided on the X-ray path and only one multilayered-film reflection mirror is used.

In a design example, the laser plasma X-ray source 100 uses a YAG laser of 1.0 J/pulse and pulse width 10 ns, as the laser 9. The size of the light point on the target 11 is $10^{-2}$ mm$^2$. As the target 11, Mo is used. The target 11 has a cylindrical shape and it is rotatable about an axis parallel to its generating line, so as to change the pulse irradiation position continuously.

In this design example, the substrate S of the multilayered-film concave reflection mirror 14 has a cylindrical (ring) shape of a height 120 mm. It may be provided by cutting an ellipsoid of revolution having a major diameter of 424.3 mm and a minor diameter of 300 mm, along its plane of revolution. As regards the configuration precision, an error of about $\lambda/2$ ($\lambda = 6328$ nm) from an idealistic configuration and surface roughness of 3 Arms are adequate. In this design example, alternate layers of Ni and C materials of a total number of 501 (five hundred and one) are formed on the substrate surface. The angle of incidence of the X-rays is set to be 45 deg. at the center of the concave reflection mirror, and it changes continuously in the major axis direction of the mirror. At an end portion F of the region to be irradiated which portion is far from the X-ray source, the angle of incidence may be 43.1 deg. At another end portion E which is near to the X-ray source, the angle of incidence may be 47.9 deg. In respect to the minor axis direction, there may be no distribution of incidence angle. The thickness of the multilayered film may have a distribution along the major axis of the reflection mirror. At the end portion E near to the X-ray source, it may be 6.7 Å (Ni layer) and 24.2 Å (C layer) (constant thickness layers). At the end portion F far from the X-ray source, the thickness may be 7.1 Å (Ni layer) and 26.6 Å (C layer) (constant thickness layers). Between the end portions E and F, the film thickness may change continuously. With regard to the minor axis direction, the film thickness of the multilayered films may be constant. The angle of emission of the X-rays may be set to be 45 deg.

The X-ray emitting point 11a and the object (sample) to be examined are placed at the focal point positions of the ellipsoid of revolution of the multilayered-film concave reflection mirror 14. The X-rays 12 emitted by the laser plasma X-ray source 100 are partially blocked by the aperture means 13, and the transmitted rays are incident on the reflection mirror 14. The X-rays are reflected by the reflection mirror and they illuminate the sample 15. Thus, the sample 15 is irradiated with beams inclined with respect to the optical axis of the Fresnel zone plate 17. The X-rays may be collected by the reflection mirror so as to form a beam spot of about 5 micron diameter, upon the sample 15 surface. Simultaneously, the wavelength selection may be effected to the X-rays, and the center wavelength may be 4.5 nm and the wavelength resolution $\lambda/\Delta\lambda$ may be about 170.

As regards the Fresnel zone pate 17 for imaging the sample 15, in this design example, the width of its innermost ring zone is 4.24 microns and the width of its outermost ring zone is 60.15 microns. The number of ring zones is 201 (two hundred and one). In order to prevent transmission light (zero-th order light), advancing along the optical axis of the Fresnel zone plate, from directly impinging on the image 19 of the sample, the area of the Fresnel zone plate from the first to fourth ring zones from the inside are covered by an appropriate X-ray blocking material so as to block the X-ray transmission. The focal length of the zone plate is 4 mm.

In this optical system, the parameter P (equation (1)) is set to be about 0.218, and the design is so set to satisfy a condition of $10^{-2} \leq P \leq 10$. By disposing an X-ray photographic film 18 at the imaging position and by exposing the same, the image 19 is detectable. As the sample 15, a membrane of silicon nitride patterned by gold may be used. The exposure may be effected with the X-ray path being maintained with in vacuum. According to simulations, in this case, an image 19 can be formed with an enlarging magnification of 250x and a resolution of 25 microns. The exposure time is about 0.7 sec. which is about 1/460 of that where a grazing incidence type toroidal diffraction grating without multilayered film is used. The reasons why the multilayered-film concave reflection mirror can provide an illumination system which is significantly brighter that the grazing incidence type toroidal diffraction grating are that: it has low wavelength resolution; it can collect X-rays of a large solid angle; and it has high reflectivity.

**Claims**

1. An X-ray microscope system, comprising a source (100; 9, 11) for supplying X-rays (1; 12), an irradiation system for irradiating an object (3) with the X-rays, a zone plate (4; 17) for forming a magnified image (6;19) of the object irradiated with the X-rays, and a detector (5; 18) for detecting the formed image,

    characterised in that said irradiation system includes a concave mirror (2; S) having a multilayered film (L) for reflecting the X-rays from the source and for converging them onto the object, and in that the following condition is satisfied:

    $$0.01 \leq 0.257831 \times [(f\lambda)/(rn)^2] \times (\lambda/\Delta\lambda) \leq 10$$

    where $\lambda$ is the center wavelength of the spectrum of a reflected beam to be collected on the object, $\Delta\lambda$ is a half width of the spectrum, f is the focal length of said zone plate with respect to the center wavelength, and rn is the radius of said zone plate.

2. An X-ray microscope system as claimed in claim 1, characterised in that said X-ray source comprises a laser (9) and a target (11) for receiving a laser beam (10) from said laser and for producing X-rays.

3. An X-ray microscope system as claimed in claim 1 or 2, characterised in that the mirror (S) forms a reflected beam which is inclined with respect to the optical axis of the zone plate (4).

4. An X-ray microscope system as claimed in claim 1, 2 or 3, characterised in that the mirror has a first portion having a first reflectivity, for receiving a central portion of the X-ray beam, and a second portion having a second reflectivity, for receiving the remaining portion of the X-ray beam, and wherein the first reflectivity is lower than the second reflectivity.

5. An X-ray microscope system as claimed in claim 4, characterised in that the first portion is not covered by the multilayered film.

6. An X-ray microscope system as claimed in claim 4, characterised in that at the first portion the multilayered film structure has been destroyed.

7. An X-ray microscope system as claimed in any one of claims 1-6, characterised in that it is adapted so that a formed image of the object is detectable with the ray emanating from the object along an optical axis of the zone plate being prevented from being superposed on the formed image.

8. An X-ray microscope system as claimed in claim 7, characterised in that with respect to a central portion of the zone plate (17) and a plurality of ring zones of the zone plate around the central portion, the advancement of a ray along the optical axis of the zone plate is blocked.

9. An X-ray microscope system as claimed in claim 8, comprising a blocking member for blocking, with respect to a central portion of said zone plate (17) and a plurality of ring zones of said zone plate around the central portion, the advancement of a ray along the optical axis of said zone plate.

10. An X-ray microscope system as claimed in any one of claims 1-7, further characterised by a filter (13) for preventing a ray, emitted from the X-ray source along an optical axis of said zone plate, from being superposed on the formed image.

11. An X-ray microscope system as claimed in claim 10, characterised in that said filter (13) is an apertured member.

12. An X-ray microscope system as claimed in any one of claims 1-11, characterised in that the irradiation system comprises a plurality of said multilayered-film mirrors for converging the X-rays from the source onto the object.

13. An X-ray microscope system as claimed in any one of claims 1-11, characterised in that said multilayered-film mirror is of cylindrical shape.

14. An X-ray microscope system as claimed in any preceding claim, characterised in that the following condition is satisfied:

$$0.03 \leq 0.257831 \times [(f\,\lambda)/(rn)^2] \times (\lambda/\Delta\lambda) \leq 1$$

15. An X-ray microscope system as claimed in any one of claims 1 to 14, characterised in that, with respect to a predetermined direction along the surface of said mirror, the thickness of said multilayered film of said mirror changes so as to compensate a change in wavelength of a reflected beam dependent upon the position on said mirror.

16. An X-ray microscope system as claimed in any one of claims 1-15, characterised in that the layers of the mirror are alternately chromium and carbon.

17. An X-ray microscope system as claimed in any one of claims 1-16, characterised in that said X-ray source comprises a synchrotron.


**Patentansprüche**

1. Röntgenstrahlen-Mikroskopsystem mit einer Quelle (100; 9, 11) zur Abgabe von Röntgenstrahlen (1; 12), einem Bestrahlungssystem zur Bestrahlung eines Gegenstands (3) mit den Röntgenstrahlen, einem Zonengitter (4; 17) zur Erzeugung eines vergrößerten Bildes (6; 19) des mit den Röntgenstrahlen bestrahlten Gegenstands, und mit einem Detektor (5; 18) zum Nachweis des erzeugten Bildes,

   **dadurch gekennzeichnet**, daß das Bestrahlungssystem einen konkaven Spiegel (2; S) enthält mit einem Mehrschichtfilm (L) zur Reflexion der Röntgenstrahlen aus der Quelle und zur Bündelung dieser auf den Gegenstand und durch Einhalten der nachstehenden Bedingung:

   $$0{,}01 \leq 0{,}257831 \times [(f\lambda)/(rn)^2] \times (\lambda/\Delta\lambda) \leq 10$$

   wobei $\lambda$ die Mittenwellenlänge des Spektrums eines auf den Gegenstand zu bündelnden reflektierten Strahls ist, $\Delta\lambda$ die halbe Spektrumbreite des Zonengitters in Hinsicht auf die Mittenwellenlänge und rn der Radius des Zonengitters ist.

2. Röntgenstrahlen-Mikroskopsystem nach Anspruch 1, **dadurch gekennzeichnet**, daß die Röntgenstrahlenquelle einen Laser (9) enthält und einen Auftreffgegenstand (11) zum Empfang des Laserstrahls (10) aus dem Laser und zur Erzeugung von Röntgenstrahlen.

3. Röntgenstrahlen-Mikroskopsystem nach Anspruch 1 oder 2, **dadurch gekennzeichnet**, daß der Spiegel (S) einen reflektierten Strahl bildet, der in Hinsicht auf die optische Achse des Zonengitters (4) geneigt ist.

4. Röntgenstrahlen-Mikroskopsystem nach Anspruch 1, 2 oder 3 **dadurch gekennzeichnet**, daß der Spiegel einen ersten Abschnitt mit einem ersten Reflexionsvermögen zum Empfang eines Mittenabschnitts des Röntgenstrahls aufweist und einen zweiten Abschnitt mit einem zweiten Reflexionsvermögen zum Empfang des restlichen Teiles des Röntgenstrahls, und wobei das erste Reflexionsvermögen geringer als das zweite Reflexionsvermögen ist.

5. Röntgenstrahlen-Mikroskopsystem nach Anspruch 4, **dadurch gekennzeichnet**, daß der erste Abschnitt nicht mit dem Mehrschichtfilm bedeckt ist.

6. Röntgenstrahlen-Mikroskopsystem nach Anspruch 4, **dadurch gekennzeichnet**, daß der erste Abschnitt der Mehrschicht-Filmstruktur zerstört worden ist.

7. Röntgenstrahlen-Mikroskopsystem nach einem der Ansprüche 1 bis 6, **dadurch gekennzeichnet**, daß dieses so eingerichtet ist, daß ein erzeugtes Bild des Gegenstands mit dem vom Gegenstand längs einer optischen Achse des Zonengitters abgestrahlten Strahl nachweisbar ist, der daran gehindert ist, sich mit dem erzeugten Bild zu überlagern.

8. Röntgenstrahlen-Mikroskopsystem nach Anspruch 7, **dadurch gekennzeichnet**, daß in Hinsicht auf einen Mittenabschnitt des Zonengitters (17) und auf eine Vielzahl von Ringzonen des Zonengitters um den Mittenabschnitt die Ausbreitung eines Strahls entlang der optischen Achse des Zonengitters blockiert ist.

9. Röntgenstrahlen-Mikroskopsystem nach Anspruch 8 mit einem Blockierglied zum Blockieren der Ausbreitung eines Strahls längs der optischen Achse des Zonengitters in Hinsicht auf einen Mittenabschnitt des Zonengitters (17) und einer Vielzahl von Ringzonen des Zonengitters um den Mittenabschnitt.

10. Röntgenstrahlen-Mikroskopsystem nach einem der Ansprüche 1 bis 7, **gekennzeichnet durch** ein Filter (13) zur Vermeidung der Überlagerung eines von der Röntgenstrahlenquelle längs der optischen Achse des Zonengitters emitierten Strahls mit dem erzeugten Bild.

11. Röntgenstrahlen-Mikroskopsystem nach Anspruch 10, **dadurch gekennzeichnet**, daß das Filter (13) ein mit Öffnungen versehenes Glied ist.

12. Röntgenstrahlen-Mikroskopsystem nach einem der Ansprüche 1 bis 11, **dadurch gekennzeichnet**, daß das Bestrahlungssystem eine Vielzahl der Mehrschichtfilmspiegel enthält, um die Röntgenstrahlen aus der Quelle auf den Gegenstand zu bündeln.

13. Röntgenstrahlen-Mikroskopsystem nach einem der Ansprüche 1 bis 11, **dadurch gekennzeichnet**, daß der Mehrschichtfilmspiegel eine zylindrische Gestalt hat.

14. Röntgenstrahlen-Mikroskopsystem nach einem der vorstehenden Ansprüche, **dadurch gekennzeichnet**, daß dieses die folgende Bedingung erfüllt:

$$0,03 \leq 0,25783 \times [(f\lambda)/(rn)^2] \times (\lambda/\Delta\lambda) \leq 1.$$

15. Röntgenstrahlen-Mikroskopsystem nach einem der Ansprüche 1 bis 14, **dadurch gekennzeichnet**, daß die Stärke des Mehrschichtfilms des Spiegels sich in Hinsicht auf eine vorbestimmte Richtung entlang der Oberfläche des Spiegels ändert, um so eine Änderung der Wellenlänge des reflektierten Strahls abhängig von der Position des Spiegels zu kompensieren.

16. Röntgenstrahlen-Mikroskopsystem nach einem der Ansprüche 1 bis 15, **dadurch gekennzeichnet**, daß die Schichten des Spiegels abwechselnd aus Chrom und Kohlenstoff bestehen.

17. Röntgenstrahlen-Mikroskopsystem nach einem der Ansprüche 1 bis 16, **dadurch gekennzeichnet**, daß die Röntgenstrahlungsquelle ein Synchrotron enthält.

**Revendications**

1. Système de microscope à rayons X, comprenant une source (100; 9, 11) pour fournir des rayons X (1; 12), un système d'exposition pour exposer un objet (3) aux rayons X, une lentille zonale (4; 17) pour former une image (6; 19) grossie de l'objet exposé aux rayons X et un détecteur (5; 18) pour détecter l'image formée,

caractérisé en ce que ledit système d'exposition comporte un miroir (2; S) concave ayant un film (L) multicouche pour réfléchir les rayons X provenant de la source et pour les faire converger sur l'objet, et en ce que la condition suivante est satisfaite :

$$0,01 \leq 0,257831 \times [(f\lambda) / (rn)^2] \times (\lambda/\Delta\lambda) \leq 10$$

où $\lambda$ est la longueur d'onde centrale du spectre d'un faisceau réfléchi devant être collecté sur l'objet, $\Delta\lambda$ est la demi-largeur du spectre, f est la longueur focale de ladite lentille zonale par rapport à la longueur d'onde centrale, et rn est le rayon de ladite lentille zonée.

2. Système de microscope à rayons X selon la revendication 1, caractérisé en ce que ladite source de rayons X comprend un laser (9) et une cible (11) pour recevoir un faisceau (10) laser dudit laser et pour produire des rayons X.

3. Système de microscope à rayons X selon la revendication 1 ou 2, caractérisé en ce que le miroir (S) forme un faisceau réfléchi qui est incliné par rapport à l'axe optique de la lentille zonale (4).

4. Système de microscope à rayons X selon la revendication 1, 2 ou 3, caractérisé en ce que le miroir a une première partie ayant une première réflectivité pour recevoir une partie centrale du faisceau de rayons X, et une seconde partie ayant une seconde réflectivité, pour recevoir la partie restante du faisceau de rayons X, et dans lequel la première réflectivité est inférieure à la seconde réflectivité.

5. Système de microscope à rayons X selon la revendication 4, caractérisé en ce que la première partie n'est pas recouverte par le film multicouche.

6. Système de microscope à rayons X selon la revendication 4, caractérisé en ce que la première partie de la structure du film multicouche a été détruite.

7. Système de microscope à rayons X selon l'une quelconque des revendications 1-6, caractérisé en ce qu'il est conçu pour qu'une image formée de l'objet puisse être détectée empêchant le rayon émanant de l'objet le long d'un axe optique de la lentille zonale, d'être superposé à l'image formée.

8. Système de microscope à rayons X selon la revendication 7, caractérisé en ce que, par rapport à une partie centrale de la lentille zonale (17) et à un ensemble de zones annulaires de la lentille zonale entourant la partie centrale, la progression d'un rayon le long de l'axe optique de la lentille zonale est occultée.

9. Système de microscope à rayons X selon la revendication 8, comprenant un élément d'occultation pour occulter, par rapport à une partie centrale de ladite lentille zonale (17) et à un ensemble de zones annulaires de ladite lentille zonale entourant la partie centrale, la progression d'un rayon le long de l'axe optique de ladite lentille zonale.

10. Système de microscope à rayons X selon l'une quelconque des revendications 1-7, caractérisé en outre par un filtre (13) pour empêcher un rayon, émis par la source de rayons X le long d'un axe optique de ladite lentille zonale, d'être superposé à l'image formée.

11. Système de microscope à rayons X selon la revendication 10, caractérisé en ce que ledit filtre (13) est un élément à ouverture.

12. Système de microscope à rayons X selon l'une quelconque des revendications 1-11, caractérisé en ce que le système d'exposition comprend un ensemble de miroirs à films multicouches pour faire converger les rayons X provenant de la source sur l'objet.

13. Système de microscope à rayons X selon l'une quelconque des revendications 1-11, caractérisé en ce que ledit miroir à film multicouche a une forme cylindrique.

14. Système de microscope à rayons X selon l'une quelconque des revendications précédentes, caractérisé en ce que la condition suivante est satisfaite:

$$0,03 \leq 0,257831 \times [(f\ \lambda)\ /\ (rn)^{2]} \times (\lambda/\Delta\lambda) \leq 1$$

15. Système de microscope à rayons X selon l'une quelconque des revendications 1 à 14, caractérisé en ce que, dans une direction prédéterminée le long de la surface dudit miroir, l'épaisseur dudit film multicouche dudit miroir varie de façon à compenser une variation de longueur d'onde d'un faisceau réfléchi en fonction de la position sur ledit miroir.

16. Système de microscope à rayons X selon l'une quelconque des revendications 1-15, caractérisé en ce que les couches du miroir sont en alternance en chrome et en carbone.

17. Système de microscope à rayons X selon l'une quelconque des revendications 1-16 caractérisé en ce que ladite source de rayons X comprend un synchrotron.

FIG. 1

FIG. 2

FIG. 3

12

FIG. 4